# EUROPÄISCHE PATENTANMELDUNG

(11) **EP 3 557 060 A1**
(43) Veröffentlichungstag der Anmeldung: **23.10.2019**
(21) Anmeldenummer: 19160149.1
(22) Anmeldetag: 28.02.2019
(51) Int. Cl.: F04B 53/12, F16K 15/04

(54) **SELBSTHALTENDE DRUCKFEDER FÜR PUMPEN**

(30) Priorität: 19.04.2018 DE 102018109347
(71) Anmelder: ProMinent GmbH, 69123 Heidelberg (DE)
(72) Erfinder: Reinhard, Martin, 69123 Heidelberg (DE); Elgetz, Roland, 69214 Eppelheim (DE)
(74) Vertreter: Dr. Langfinger & Partner

(57) **Zusammenfassung**

Die vorliegende Erfindung betrifft eine Schraubenfeder für eine Pumpe mit einem in Schraubenform gewickelten Federdraht, wobei die Schraubenfeder in Form einer Druck- oder Zugfeder ausgebildet ist, und wobei der Federdraht einen Krafterzeugungsabschnitt und einen Verbindungsabschnitt ausbildet, wobei der Krafterzeugungsabschnitt zylinder-, tonnen- oder kegelförmig ausgebildet ist und der Verbindungsabschnitt ebenfalls eine mindestens teilweise, insbesondere vollständige, Windung des Federdrahts umfasst oder ausbildet, wobei der Durchmesser des Verbindungsabschnitts größer oder kleiner ist als der Durchmesser des dem Verbindungsabschnitt zugewandten Endes des Krafterzeugungsabschnitts der Schraubenfeder, sowie eine Pumpe und eine Verwendung.

## Beschreibung

Die vorliegende Erfindung betrifft eine selbsthaltende Druckfeder für eine Pumpe.

Im Stand der Technik sind verschiedene Arten von Pumpen unter unterschiedlichen Bezeichnungen bekannt, die nach ihrem technischen Aufbau oder ihrer Funktion bezeichnet sind, z.B. Kolbenpumpen, Dosierpumpen, Membranpumpen, etc.

Bei einer Hubkolbenpumpe beispielsweise kommt ein mechanisch betriebener Kolben zum Einsatz, der in einem Zylinder läuft. Dieser Kolben wird dabei mit einem Zulauf und einem Ablauf kombiniert, die jeweils durch ein Ventil verschlossen sind. Im ersten Takt, beim Ansaugen, bewegt sich der Kolben derart, dass sich das Volumen im Zylinder vergrößert und somit bei geöffneten Einlassventil Förderfluid in den Zylinder strömt. Anschließend wird das Einlassventil geschlossen und das Auslassventil geöffnet, und der Kolben bewegt sich im Zylinder derart, dass sich das Volumen in diesem wieder verkleinert und somit das Förderfluid aus dem Auslassventil austritt.

Die alternativ ebenfalls bekannten Membranpumpen besitzen demgegenüber einen Förderraum mit einem Sauganschluss und einem Druckanschluss sowie einen Arbeitsraum, der durch eine Membran von dem Förderraum getrennt ist. Um ein Medium zu fördern, wird die Membran oszillierend zwischen einer ersten und zweiten Position hin- und her bewegt, in dem der Arbeitsraum mit einem Hydraulikfluid befüllt ist, welches mit einem oszillierenden Druck beaufschlagt wird. Die zwei Positionen der Membran werden dabei meist als Druckhubposition und als Saughubposition bezeichnet.

Hydraulisch betriebene Membranpumpen kommen bevorzugt bei der Förderung von Förderfluiden unter hohen Drücken zum Einsatz, da durch das Hydraulikfluid eine gleichmäßige Belastung der Membran erfolgt und diese somit eine hohe Lebensdauer aufweist.

Bei Pumpen kommen dabei an unterschiedlichen Stellen Federn zum Einsatz. Dabei handelt es sich meist um Schraubenfedern, die in Form von Zug- oder Druckfedern ausgebildet sind. Diese Federn müssen meist an einem Ende axial mit weiteren Komponenten der Pumpen verbunden werden.

Beispielsweise kommen solche Schraubenfedern als Druckfedern bei Ventilen zum Einsatz, oder auch zum Bereitstellen einer Rückholkraft einer Zugstange einer Membranpumpe.

Derzeit werden Federn bevorzugt durch einen Pressverbund, Sicherungsringe oder Klemmschrauben mit den weiteren Elementen der Pumpen verbunden. Dies hat dabei mehrere Nachteile, u.a., dass meist nur eine undefinierte Haltekraft durch Toleranzen bereitgestellt wird. Des Weiteren werden hohe Anforderungen an die Aufnahmegeometrie gestellt und die Feder selbst ist nicht auf Zug belastbar.

Dabei kann es, insbesondere bei kleinen Pumpen und Geometrien, z.B. bei kleinen Ventilen, vorkommen, dass das Federende nicht in die vorgesehene Fassung gebracht wird. Besonders problematisch ist dies bei kleinen Bauteilen, da die Kontrollmöglichkeiten aufgrund der Baugrößen gering sind.

Wird jedoch z.B. eine Feder bei der Montage eines Ventils nicht richtig in die dafür vorgesehene Fassung gebracht, wird die Funktionalität des Ventils negativ beeinträchtigt.

Die Aufgabe der vorliegenden Erfindung liegt daher darin, die Nachteile des Stands der Technik zu überwinden, und insbesondere Federn zu liefern, die sich möglichst einfach und besonders zuverlässig mit Elementen einer Pumpe verbinden lässt. Diese Aufgabe wird gelöst durch eine Schraubenfeder für eine Pumpe mit einem in Schraubenform gewickelten Federdraht, wobei die Schraubenfeder in Form einer Druck- oder Zugfeder ausgebildet ist, und wobei der Federdraht einen Krafterzeugungsabschnitt und mindestens einen Verbindungsabschnitt ausbildet, wobei der Krafterzeugungsabschnitt zylinder-, tonnen- oder kegelförmig ausgebildet ist und der Verbindungsabschnitt ebenfalls eine mindestens teilweise, insbesondere vollständige, Windung des Federdrahts umfasst oder ausbildet, so dass der Verbindungsabschnitt ebenfalls federn ist, wobei der Durchmesser des Verbindungsabschnitts größer oder kleiner ist als der Durchmesser des dem Verbindungsabschnitt zugewandten Endes des Krafterzeugungsabschnitts der Schraubenfeder.

Der Erfindung liegt dabei die überraschende Erkenntnis zugrunde, dass es möglich ist, die Arretierelemente für eine Feder durch diese selbst mit auszubilden, indem der Federdraht selbst zusätzlich einen Verbindungsabschnitt ausbildet. Der Verbindungsabschnitt ist dabei ebenfalls federnd ausgebildet, was bedeutet, dass dessen Geometrie eine Federeigenschaft aufweist, die über die Federeigenschaft des Federdrahts hinausgeht.

Zwar sind unterschiedliche Geometrien von Federn im Stand der Technik bekannt, seien es zylinderförmige oder kegelförmige Schraubenfedern, doch unterscheiden diese meist nicht unterschiedliche Funktionsabschnitte der Federn, obwohl sich deren Durchmesser ändern können.

Die bekannten Schraubenfedern weisen allesamt nur einen Krafterzeugungsabschnitt auf, wobei die Endwindungen eine andere Form aufweisen können. Diese Form der bekannten Endwindungen zielt dabei einzig und alleine darauf ab, die Kräfte mittig in die Feder einzuleiten.

Es ist jedoch beispielsweise bekannt, dass die Ösen einer Zugfeder ebenfalls von demselben Federdraht gebildet werden. Dies Ösen stellen einen aus dem Federdraht gebildeten Verbindungsabschnitt dar, der jedoch nicht aus einer Windung besteht und nicht federnd wirkt.

Des Weiteren unterscheiden sich die bekannten Verbindungsabschnitte dadurch, dass diese nicht der Ausrichtung der Feder als solche dienen, sondern der mittigen Krafteinleitung in die Federn. Eine axiale Stabilisierung wird durch diese Verbindungsabschnitte im Vergleich zu dem erfindungsgemäßen Verbindungsabschnitt nicht erreicht.

Auch die auslaufenden, z.T. geschliffenen Enden von bekannten Druckfedern unterscheiden sich von dem erfindungsgemäßen Federabschnitt in ihrer Geometrie, da diese ebenfalls keine Windung im vom Krafterzeugungsabschnitt abweichenden Durchmesser ausbilden.

Durch den erfindungsgemäßen Verbindungsabschnitt wird es hingegen möglich, dass die Feder mit einem weiteren Element verbunden werden kann, ohne dass es zusätzlicher Sicherungsmittel bedarf. Dies kann z.B. dadurch erreicht werden, dass die Windung des Verbindungsabschnitts in eine Nut eingreift, die die Feder axial ausrichtet und arretiert.

Dabei hat es sich insbesondere als vorteilhaft erwiesen, dass der Krafterzeugungsabschnitt zylinderförmig ausgebildet ist und der Verbindungsabschnitt einen größeren oder kleineren Durchmesser als der Krafterzeugungsabschnitt aufweist.

Des Weiteren kann es vorgesehen sein, dass nur ein Verbindungsabschnitt umfasst ist, der insbesondere aus mindestens einer halben, insbesondere mindestens einer vollständigen Endwindung besteht.

Es hat sich gezeigt, dass gerade beim Einsatz von Druckfedern es oftmals ausreichend ist, wenn diese nur an einem Ende fest mit weiteren Elementen verbunden ist. Hierdurch wird ein einfacher Einbau ermöglicht, in dem der erfindungsgemäße Verbindungsabschnitt beispielsweise in eine Nut eingeführt wird. Das andere Ende der Feder kann dann ohne weitere feste Verbindung in Wirkverbindung mit weiteren Elementen gebracht werden.

Auch liefert die Erfindung eine Pumpe umfassend eine erfindungsgemäße Schraubenfeder, wobei der Verbindungsabschnitt der Schraubenfeder in eine Nut oder Aussparung der Pumpe eingebracht ist.

Wie bereits ausgeführt, ist diese Art der Verbindung einer Feder mittels einer Nut besonders vorteilhaft. Die Erzeugung einer Nut ist einfach und kostengünstig und in den meisten Fällen problemlos möglich.

Es kann insbesondere vorgesehen sein, dass die Schraubenfeder von einem Ventil der Pumpe umfasst ist oder mit diesem in Wirkverbindung steht.

Dabei kann es besonders vorteilhaft sein, dass das Ventilgehäuse die Nut oder die Aussparung aufweist und der Durchmesser des Verbindungsabschnitts der Spiralfeder insbesondere größer ist als der Krafterzeugungsabschnitt.

Oftmals kommen Kugelventile zum Einsatz. Bei diesen verschließt eine Kugel den Ausflussring des Ventils, den sogenannten Ventilsitz. Zu einem Durchfluss kommt es erst, wenn die Kraft auf die Kugel ausreicht, um diese aus dem Ventilsitz zu heben. Um die Kugel im Ventilsitz zu halten, kommen wiederum oftmals Druckfedern zum Einsatz. Diese müssen an einem Ende arretiert werden, damit sie nicht verrutschen. Innerhalb des Ventilgehäuses kann eine solche Arretierung dabei erfindungsgemäß dadurch erfolgen, dass der Verbindungsabschnitt der erfindungsgemäßen Schraubenfeder größer ist als der Innendurchmesser des Ventilgehäuses und dieses eine umlaufende Nut aufweist, in die die Windung des Verbindungsabschnitts zum Verbindung von Ventilgehäuse und Feder eingreift.

Dabei kann es vorgesehen sein, dass das Innere des Ventilgehäuses als Führung für die Feder dient, so dass diese nicht nur am Verbindungsabschnitt mit dem Ventilgehäuse verbunden und fixiert ist, sondern auch weitergehend axial geführt ist.

Auch kann vorgesehen sein, dass die Pumpe in Form einer Membranpumpe ausgebildet ist, und die Schraubenfeder mit einer Zugstange der Membranpumpe verbunden ist, die eine Membran der Membranpumpe in Richtung der Saughubposition mit einer Rückholkraft beaufschlagt bzw. beaufschlagen kann.

Dabei kann es insbesondere vorteilhaft sein, dass die Zugstange eine Nut oder Aussparung umfasst, wobei die Schraubenfeder die Zugstange umschließend angeordnet ist, und der Verbindungsabschnitt der Spiralfeder kleiner ist als der Krafterzeugungsabschnitt und in die Nut der Zugstange eingelassen ist.

In diesem Ausführungsbeispiel hat es sich als vorteilhaft erwiesen, dass die Feder um die Zugstange herum angeordnet wird und mittels des Verbindungsabschnitts, der kleiner ist als der Durchmesser der Zugstange, mit der Zugstange verbunden ist. Dabei bildet die Zugstange besonders vorteilhaft eine Nut für den Verbindungsabschnitt aus. Die Zugstange führt dabei die erfindungsgemäße Feder in axialer Richtung, während der Verbindungsabschnitt die Feder arretiert.

Erfindungsgemäß hat es sich zudem als vorteilhaft erwiesen, dass die Schraubenfeder nicht mit weiteren Befestigungsmitteln, insbesondere mit keinem Sicherungsring oder einer Klemmscheibe, mit der Pumpe verbunden ist.

Ein solcher Verzicht auf weitere Befestigungsmittel ermöglicht eine einfachere und sichere Montage und reduziert aufgrund des Verzichts auf weitere Bauteile Einbauschritte und Kosten. Es hat sich gezeigt, dass der erfindungsgemäße Verbindungsabschnitt eine gewünschte sichere Verbindung der Feder mit weiteren Elementen bereits bereitstellt.

Schließlich liefert die Erfindung auch eine Verwendung einer erfindungsgemäßen Schraubenfeder in einer Pumpe, insbesondere in einem Ventil einer Pumpe oder in Wirkverbindung mit einer Zugstange einer Membranpumpe.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert wird, ohne dadurch die Erfindung zu beschränken.

Dabei zeigt:
- Fig. 1:: einen perspektiver Ansicht einer Ausführungsform einer erfindungsgemäßen Schraubenfeder;
- Fig. 2:: einen Schnittansicht einer Einbausituation einer erfindungsgemäßen Schraubenfeder in einem Ventil im Schnitt; und
- Fig. 3:: einen Schnittansicht einer Einbausituation einer erfindungsgemäßen Schraubenfeder in einer Membranpumpe im Schnitt.

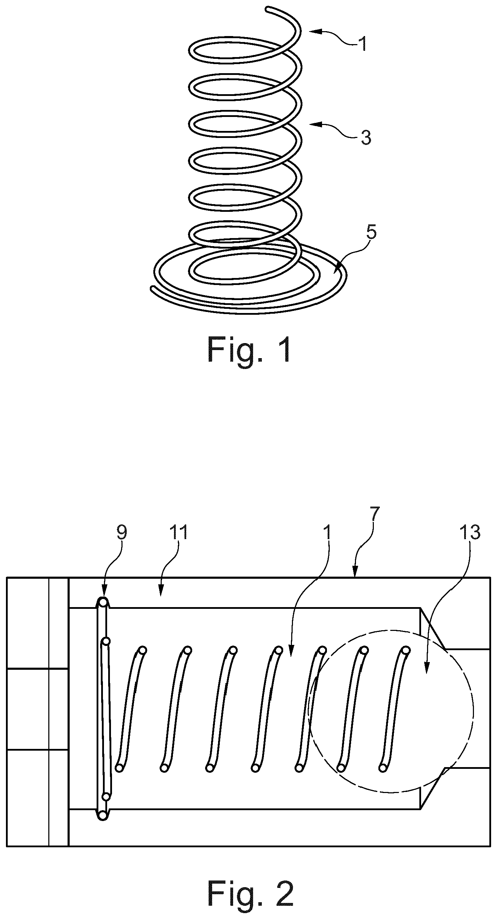

In Figur 1 ist beispielhaft eine Ausführungsform einer erfindungsgemäßen Schraubenfeder 1 gezeigt. Diese ist in Form einer Druckfeder ausgebildet, wobei der Federdraht einen Krafterzeugungsabschnitt 3 und einen Befestigungsabschnitt 5 ausbildet.

Es ist gut zu sehen, dass der Krafterzeugungsabschnitt 3 zylinderförmig ausgebildet ist und der Verbindungsabschnitt 5 ebenfalls eine vollständige Windung des Federdrahts umfasst, so dass der Verbindungsabschnitt 5 ebenfalls federn ist.

Des Weiteren ist gezeigt, dass der Durchmesser des Verbindungsabschnitts 5 größer ist als der Durchmesser des dem Verbindungsabschnitt 5 zugewandten Endes des Krafterzeugungsabschnitts 3 der Schraubenfeder 1.

Somit ist der Verbindungsabschnitt 5 geeignet, in eine Nut eines die Schraubenfeder 1 zumindest teilweise umschließenden Gehäuses eingeführt zu werden und eine Verbindung zwischen dem nicht gezeigten Gehäuse und der Schraubenfeder 1 zu bilden.

In Figur 2 ist die Schraubenfeder 1 aus Figur 1 in einer Einbausituation gezeigt. Die Schraubenfeder 1 ist dabei in ein Kugelventil 7 integriert, welches eine Nut 9 aufweist, die auf der Innenseite 11 des Kugelventils 7 ausgebildet ist. Der im Vergleich zum Krafterzeugungsabschnitt 3 größere Verbindungsabschnitt 5 der Schraubenfeder 1 fixiert dabei das zugehörige Ende der Schraubenfeder 1 in axialer Richtung.

Des Weiteren wird die Schraubenfeder 1 durch die Innenseiten 11 des Kugelventils 7 geführt. Somit ist sichergestellt, dass immer eine gewünschte Kraft auf die Kugel 13 ausgeübt wird, ohne dass weitere Bauteile zur Sicherung der Schraubenfeder 1 notwendig sind.

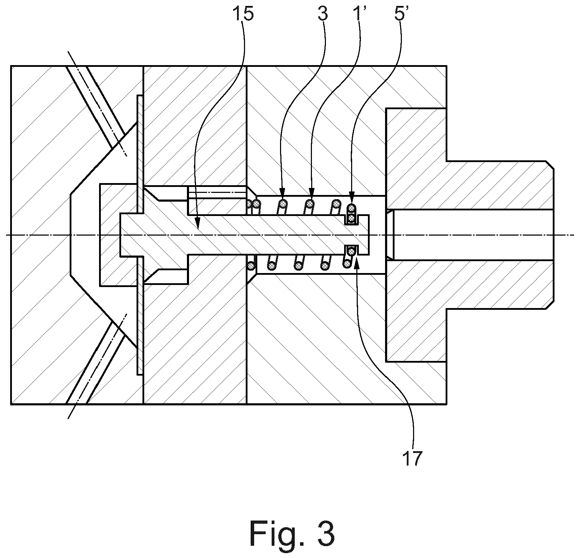

In Figur 3 ist eine alternative Ausführungsform einer erfindungsgemäßen Schraubenfeder 1' gezeigt. Diese umfasst ebenfalls einen Krafterzeugungsabschnitt 3, aber einen im Vergleich zum ersten Ausführungsbeispiel kleineren Verbindungsabschnitt 5'. Dieser im Durchmesser kleinere Verbindungsabschnitt 5' dient dabei der Verbindung der Schraubenfeder 1' mit einer Zugstange 15 einer nicht gezeigten Membranpumpe. Durch eine von der Zugstange 15 ausgebildeten Nut 17 ist dabei der Verbindungsabschnitt 5' mit der Zugstange 15 sicher fixiert.

Es ist dabei in Figur 3 besonders gut ersichtlich, dass die Zugstange 15 selbst der axialen Führung der Schraubenfeder 1' dient, während durch den Verbindungsabschnitt 5' in Kombination mit der Nut am Ende der Schraubenfeder 1' eine axiale Bewegung des fixierten Endes der Schraubenfeder 1' relativ zur Zugstange 15 unterbunden wird.

Die in der voranstehenden Beschreibung, den Ansprüchen sowie den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Schraubenfeder, insbesondere für eine Pumpe, mit einem in Schraubenform gewickelten Federdraht, wobei die Schraubenfeder in Form einer Druck- oder Zugfeder ausgebildet ist, und wobei der Federdraht einen Krafterzeugungsabschnitt und einen Verbindungsabschnitt ausbildet, wobei der Krafterzeugungsabschnitt zylinder-, tonnen- oder kegelförmig ausgebildet ist und der Verbindungsabschnitt ebenfalls eine mindestens teilweise, insbesondere vollständige, Windung des Federdrahts umfasst oder ausbildet, so dass der Verbindungsabschnitt ebenfalls federn ist, wobei der Durchmesser des Verbindungsabschnitts größer oder kleiner ist als der Durchmesser des dem Verbindungsabschnitt zugewandten Endes des Krafterzeugungsabschnitts der Schraubenfeder.

2. Schraubenfeder nach Anspruch 1, **dadurch gekennzeichnet, dass** der Krafterzeugungsabschnitt zylinderförmig ausgebildet ist und der Verbindungsabschnitt einen größeren oder kleineren Durchmesser als der Krafterzeugungsabschnitt aufweist.

3. Schraubenfeder nach Anspruch 1 oder Anspruch 2, **dadurch gekennzeichnet, dass** nur ein Verbindungsabschnitt umfasst ist, der insbesondere aus mindestens einer halben, insbesondere mindestens einer vollständigen Endwindung besteht.

4. Pumpe umfassend eine Schraubenfeder nach einem der nach einem der vorangehenden Ansprüche, wobei der Verbindungsabschnitt der Schraubenfeder in eine Nut oder Aussparung der Pumpe eingebracht ist.

5. Pumpe nach Anspruch 4, **dadurch gekennzeichnet, dass** die Schraubenfeder von einem Ventil der Pumpe umfasst ist oder mit diesem in Wirkverbindung steht.

6. Pumpe nach Anspruch 5, **dadurch gekennzeichnet, dass** das Ventilgehäuse die Nut oder die Aussparung aufweist und der Durchmesser des Verbindungsabschnitts der Spiralfeder insbesondere größer ist als der Krafterzeugungsabschnitt.

7. Pumpe nach Anspruch 4, **dadurch gekennzeichnet, dass** die Pumpe in Form einer Membranpumpe ausgebildet ist, und die Schraubenfeder mit einer Zugstange der Membranpumpe verbunden ist, die eine Membran der Membranpumpe in Richtung der Saughubposition mit einer Rückholkraft beaufschlagt bzw. beaufschlagen kann.

8. Pumpe nach Anspruch 7, **dadurch gekennzeichnet, dass** die Zugstange eine Nut oder Aussparung umfasst, wobei die Schraubenfeder die Zugstange umschließend angeordnet ist, und der Verbindungsabschnitt der Spiralfeder kleiner ist als der Krafterzeugungsabschnitt und in die Nut der Zugstange eingelassen ist.

9. Pumpe nach einem der Ansprüche 4 bis 8, **dadurch gekennzeichnet, dass** die Schraubenfeder nicht mit weiteren Befestigungsmitteln, insbesondere mit keinem Sicherungsring oder einer Klemmscheibe, mit der Pumpe verbunden ist.

10. Verwendung einer Schraubenfeder nach einem der Ansprüche 1 bis 4 in einer Pumpe, insbesondere in einem Ventil einer Pumpe oder in Wirkverbindung mit einer Zugstange einer Membranpumpe.
